# EUROPÄISCHE PATENTSCHRIFT

(11) **EP 1 363 242 B1**
(45) Veröffentlichungstag und Bekanntmachung des Hinweises auf die Patenterteilung: **12.11.2014**
(21) Anmeldenummer: 02009386.0
(22) Anmeldetag: 07.05.2002
(51) Int. Cl.: G06T 7/00

(54) **Verfahren und Vorrichtung zum Lokalisieren einer Struktur in einem gemessenen Datensatz**
Method and device for locating a structure in a measured data set
Méthode et dispositif pour localiser une structure dans un ensemble de données mesurées

(43) Veröffentlichungstag der Anmeldung: 19.11.2003
(73) Patentinhaber: Brainlab AG, 85622 Feldkirchen (DE)
(72) Erfinder: Lachner, Rainer, Dr., 85586 Poing-Angelbrechting (DE); Ruch, Christof, 81679 München (DE); Vilsmeier, Stefan, 6330 Kufstein (AT)
(74) Vertreter: Schwabe - Sandmair - Marx

(56) Entgegenhaltungen:
- FERRANT M ET AL: "MULTI-OBJECT SEGMENTATION OF BRAIN STRUCTURES IN 3D MRI USING A COMPUTERIZED ATLAS" PROCEEDINGS OF THE SPIE, SPIE, BELLINGHAM, VA, US, Bd. 3661, Februar 1999 (1999-02), Seiten 986-995, XP000892602
- THURFJELL L ET AL: "A VOLUMETRIC MODEL FOR IDENTIFYING ANATOMICAL STRUCTURES IN TOMOGRAPHIC BRAIN IMAGES" PROCEEDINGS OF SCANDINAVIAN CONFERENCE ON IMAGE ANALYSIS, XX, XX, Bd. 1, 1993, Seiten 473-478, XP008009978
- NOWINSKI W L ET AL: "Multiple brain atlas database and atlas-based neuroimaging system", COMPUTER AIDED SURGERY, TAYLOR & FRANCIS INC., PHILADELPHIA, PA, US LNKD- DOI:10.3109/10929089709149082, vol. 2, no. 1, 1 January 1997 (1997-01-01) , pages 42-66, XP002506649, ISSN: 1092-9088

## Beschreibung

Die vorliegende Erfindung bezieht sich auf ein Verfahren und eine Vorrichtung zum bevorzugt automatischen Lokalisieren, Messen und/oder Visualisieren mindestens einer bevorzugt anatomischen Struktur in einer Aufnahme oder in einem durch Messung gewonnenen Datensatz, wie zum Beispiel auf das Lokalisieren von bestimmten Gehirn-Strukturen oder Knochen-Strukturen in Bildern, welche beispielsweise durch ein Kernspinresonanzverfahren aufgenommen wurden.

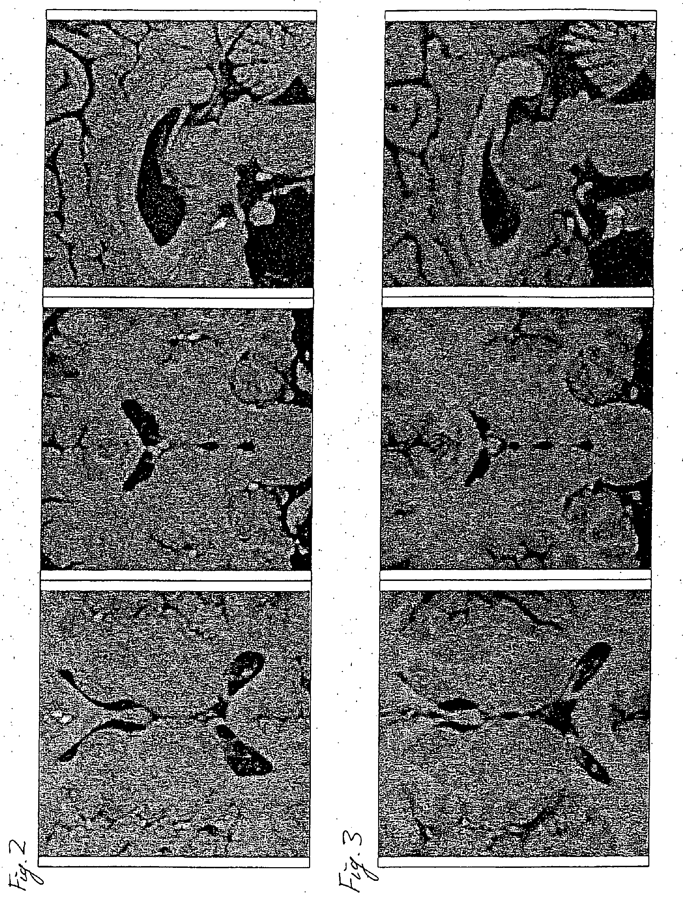

Zur Untersuchung von Personen, insbesondere zur Vorbereitung von chirurgischen Behandlungen oder Eingriffen, werden häufig Aufnahmen von bestimmten interessierenden Bereichen eines Patienten mit bekannten Verfahren durchgeführt, wie zum Beispiel Computertomographie (CT), Kernspinresonanz (MRI) oder Ultraschall-Verfahren. Diese Aufnahmeverfahren liefern einen patientenspezifischen Datensatz, wie zum Beispiel Schnittbilder eines Bereiches eines Gehirns, wie beispielhaft in Figur 2 durch unterschiedliche Grauwertverteilungen dargestellt. Dabei ist es zur Untersuchung des Patienten oder zur Vorbereitung einer Behandlung oder eines Eingriffs häufig wichtig bestimmen zu können, welche anatomische Struktur einer bestimmten Grauwertverteilung eines so gemessenen Bildes zugeordnet ist, d. h. es sollen zum Beispiel die Umrisse eines bestimmten Bereiches des Gehirns oder die Oberflächen eines Knochens in dem Bild lokalisiert werden. Diese anatomischen Strukturen sind aufgrund von anatomischen Gegebenheiten, zum Beispiel eng aneinander liegenden Strukturen, wie zum Beispiel bei Hüfte/Femur, Femur/Patella/Tibia oder aneinander liegenden Wirbelknochen nicht immer leicht exakt zu erkennen. Häufig erscheinen Aufnahmen solcher Bereiche zum Beispiel als eine einzige verbundene Knochenstruktur, deren genaue Grenzen jedoch zum Beispiel zum Einsetzen eines neuen Knie- oder Hüftgelenks erkannt werden müssen.

In der US 5,633,951 wird vorgeschlagen zwei zum Beispiel durch unterschiedliche Aufnahmeverfahren, wie zum Beispiel Kernspinresonanz und Computertomographie, gewonnene Bilder aufeinander abzubilden, wobei zum Abgleich dieser Bilder aus einem Bild eine erste Oberfläche unter Verwendung einzelner Abtastpunkte gewonnen wird, welche ein bestimmtes Merkmal eines Objekts definieren und eine solche Oberfläche eines ersten Bildes mit einer korrespondierenden Oberfläche des zweiten Bildes in Deckung gebracht wird. Jedoch ist dieses Verfahren sehr aufwändig, erfordert das Bestimmen von Oberflächen vor dem Abgleich der Bilder und liefert keine Information bezüglich der exakten Positionen bestimmter Strukturen, wie zum Beispiel die Grenzflächen benachbarter Wirbel.

Die US 5,568,384 beschreibt ein Verfahren zum Zusammensetzen von dreidimensionalen Bildsätzen zu einem einzigen zusammengesetzten Bild, wobei die einzelnen Bilder anhand von definierten einander entsprechenden Merkmalen der einzelnen Bilder zusammengesetzt werden. Insbesondere werden Oberflächen aus den Bildern ausgewählt und verwendet, um gemeinsame passende Merkmale zu finden. Auch dieses Verfahren ermöglicht jedoch zum Beispiel nicht das Lokalisieren der Umrisse eines bestimmten Wirbels, welcher eng an einen benachbarten Wirbel grenzt.

Aus der US 6,226,418 B1 ist ein Verfahren zum Registrieren eines Bildes mit einem Zielbild mit einer großen Deformation bekannt, wobei einzelne charakteristische Punkte in einem Bild definiert werden und entsprechende Punkte im Zielbild identifiziert werden, um hieraus eine Transformation zu berechnen, wodurch die einzelnen Bilder überlagert werden können. Dieses Verfahren kann nicht automatisch durchgeführt werden und ist demzufolge aufgrund der interaktiven Ausgestaltung sehr zeitaufwändig.

In der US 6,021,213 wird ein Verfahren zur Bildverarbeitung beschrieben, wobei ein Intensitätsgrenzwert für bestimmte Teile des Bildes ausgewählt wird zum Identifizieren eines anatomischen Bereichs und unter Verwendung des Grenzwertes mehrfache Vergrößerungen oder Ausdehnungsprozesse des Bereichs durchgeführt werden, bis der identifizierte Bereich bestimmte logische Einschränkungen des Knochenmarks erfüllt. Dieses Verfahren ist relativ aufwändig und muss zum Bestimmen eines jeden einzelnen interessierenden anatomischen Bereichs separat durchgeführt werden.

Aus dem Aufsatz "Multi-object segmentation of brain structures in 3D MRI using a computerized atlas" von Matthieu Ferrant u.a., Proc. of the SPIE Conferenz on Image Processing, San Diego, Februar 1999, Vol. 3661, Seiten 986 - 995 ist ein oberflächenbasierter verformbarer hierarchischer Multi-Objekt Atlas für die automatische Lokalisation und Identifikation von Gehirnstrukturen in MR Bildern bekannt. Der Atlas ist ein Multi-Objekt-Netz aus vollständig verbundenen 3D Oberflächen, welches um ein zentriertes kubisches Gitter gebildet ist. Die Registrierung des Atlas zu einem MR Bild eines Patienten wird in zwei Schritten durchgeführt: eine globale Registrierung gefolgt von einer aktiven Multi-Objekt Oberflächenverformung. Zuerst werden die kortikale Oberfläche und das ventrikuläre System segmentiert, wobei die globale Registrierung eine Transformation zweiten Grades ist, deren Koeffizienten ein Abstandsmaß zwischen diesen Oberflächen und den äquivalenten Oberflächen in dem Atlas minimieren.

Häufig ist es zur exakten Lokalisation von bestimmten Strukturen in zum Beispiel Kernspinresonanzaufnahmen erforderlich, dass bestimmte interessierende anatomische Strukturen von einem Experten manuell identifiziert und lokalisiert werden, indem die aufgenommenen Bilder einzeln untersucht werden und die Strukturen von dem Experten basierend auf seinem Fachwissen zum Beispiel unter Verwendung eines Zeichenprogramms oder bestimmter Markierungen hervorgehoben werden. Dies ist eine sehr zeitaufwändige, arbeitsintensive und mühsame Aufgabe, welche in großem Maß von der Erfahrung des Experten abhängt.

Es ist eine Aufgabe der vorliegenden Erfindung ein Verfahren und eine Vorrichtung zum automatischen Lokalisieren mindestens einer Struktur in einem durch Messung gewonnenen Datensatz, wie zum Beispiel einem oder einer Mehrzahl von Computertomographiebildern vorzuschlagen, mit welchen innerhalb kurzer Zeit vollautomatisch mindestens eine anatomische Struktur in dem Datensatz lokalisiert werden kann.

Diese Aufgabe wird durch die Gegenstände der unabhängigen Ansprüche gelöst. Vorteilhafte Ausführungsformen ergeben sich aus den Unteransprüchen.

Nach dem erfindungsgemäßen Verfahren zum automatischen Lokalisieren mindestens einer anatomischen Struktur in einem durch Messung gewonnenen Datensatz wird der gemessene Datensatz, wie zum Beispiel ein oder mehr Bilder mit zueinander definiertem Lageverhältnis oder ein volumetrischer oder dreidimensionaler Datensatz mit einem vorgegebenen Referenzdatensatz, wie zum Beispiel einem Referenzbild verglichen, wobei basierend zum Beispiel auf der Intensitätsverteilung in den jeweiligen Datensätzen durch bekannte Verfahren und Algorithmen eine Funktion zur Abbildung des Referenzdatensatzes auf den gemessenen Datensatz ermittelt wird. Ein solcher Referenzdatensatz kann zum Beispiel der Talairach-Gehirnatlas, ein künstlich erzeugtes Referenzmodell oder ein aus realen Aufnahmen oder Messungen gewonnenes Referenzmodell sein, wobei zum Beispiel eine oder mehr Referenzpersonen oder ein Referenzkörper mit dem gleichen oder einem anderen Verfahren, wie zum Beispiel Kernspinresonanz oder Computertomographie untersucht wird, wie die aktuell untersuchte Person. Basierend auf dem Vergleich des durch Messung gewonnenen Datensatzes mit dem Referenzdatensatz unter Verwendung zum Beispiel von Intensitäten oder Helligkeitswerten der darin enthaltenen Pixel oder Voxel, was die Verwendung von bestimmten benutzerdefinierten Einzelmerkmalen wie Punkten, Kurven und Oberflächen überflüssig macht, kann eine Abbildungsfunktion bestehend zum Beispiel aus Abbildungsvorschriften für Pixel oder Voxel ermittelt werden, welche den Referenzdatensatz auf den durch Messung gewonnenen Datensatz abbildet. Ebenso kann natürlich auch die Umkehrfunktion ermittelt werden, welche den durch Messung gewonnenen Datensatz auf den Referenzdatensatz abbildet. Gemäß der Erfindung wird diese Abbildungsfunktion verwendet, um einen sogenannten Label-Datensatz, welcher dem Referenzdatensatz zugeordnet ist, abzubilden. Label-Datensätze sind Referenzdatensätzen, wie zum Beispiel dem oben erwähnten Talairach-Gehirnatlas oder einem anderen anatomischen Atlas zugeordnet und enthalten eine Information, welcher Teil des zweidimensionalen oder dreidimensionalen Referenzdatensatzes einer bestimmten anatomischen Struktur oder Funktion entspricht, d. h. in dem Label-Datensatz ist die anatomische Zuordnung oder Beschreibung der anatomischen Strukturen des Referenzdatensatzes enthalten. Ist die Abbildungsfunktion zur Abbildung des Referenzdatensatzes auf den durch Messung gewonnenen Datensatz bekannt, so kann die gleiche Abbildungsfunktion verwendet werden, um den Label-Datensatz, welcher dem Referenzdatensatz zugeordnet ist, auf einen individualisierten Label-Datensatz abzubilden, welcher dem durch Messung gewonnenen Datensatz zugeordnet ist, d. h. welcher definiert wie zum Beispiel die anatomischen Strukturen in dem durch Messung gewonnenen Datensatz sind. Der durch die Abbildungsfunktion erfindungsgemäß abgebildete Referenz-Label-Datensatz stellt somit einen individualisierten Label-Datensatz dar, mit welchem zum Beispiel alle anatomischen Strukturen im durch Messung gewonnenen Datensatz lokalisiert werden können, wobei dieses Verfahren vollautomatisch ablaufen kann und keine Interaktion oder manuelle Bearbeitung durch einen Experten benötigt.

Gemäß einer vorteilhaften Ausführungsform können die Datenwerte des Referenzdatensatzes durch Untersuchung eines oder mehrerer Referenzpatienten oder Referenzkörper gewonnen werden, wobei bevorzugt das gleiche Aufnahmeverfahren verwendet wird, welches auch zur Gewinnung des durch Messung erzeugten Datensatzes eingesetzt wird, wie zum Beispiel Computertomographie (CT), Kernspinresonanz (MRI), Positronen-Emissions-Tomographie (PET), Ultraschall oder ähnliches. Hierdurch werden Datensätze erzeugt, welche gut miteinander vergleichbar sind. Dabei ist es vorteilhaft, dass bei der Erzeugung des Referenz-Label-Datensatzes eine genaue Analyse oder Untersuchung des Referenzpatienten oder Referenzkörpers durchgeführt wird, d. h. es werden zum Beispiel auf bekannte Weise manuelle Auswertungen des Referenzdatensatzes durchgeführt, um den Referenz-Label-Datensatz zu erzeugen, welcher zum Beispiel Informationen zur Anordnung oder Abgrenzung bestimmter anatomischer Strukturen in dem Referenzdatensatz enthält. Dabei können auch Mittelwerte aus mehreren Referenzdatensätzen oder Referenz-Label-Datensätzen zum Beispiel durch Untersuchung mehrerer Referenzpatienten gebildet werden, um möglichst allgemein anwendbare und einsetzbare Referenzdatensätze mit zugehörigen Referenz-Label-Datensätzen zu erhalten. Alternativ oder ergänzend dazu kann auch auf bekannte Datensätze zurückgegriffen werden, wie zum Beispiel den oben erwähnten Talairach-Gehirnatlas oder andere vorhandene anatomische Atlanten.

Das erfindungsgemäße Verfahren kann sowohl bei zweidimensionalen Ausgangsdatensätzen, d. h. Bildern zum Beispiel einer bestimmten Schnittebene durch einen Körper, oder auch bei dreidimensionalen gemessenen Datensätzen, zum Beispiel dargestellt durch Voxel, angewendet werden, um zum Beispiel anatomische Strukturen in den jeweiligen Datensätzen zu erkennen. Dabei werden die entsprechenden Datensätze mit korrespondierenden zweidimensionalen oder dreidimensionalen Referenzdatensätzen verglichen, um eine Abbildungsfunktion zu erzeugen, welche auf den Referenz-Label-Datensatz angewandt wird, um einen zweidimensionalen oder dreidimensionalen individuellen Label-Datensatz zu erhalten, welcher dem entsprechenden gemessenen zweidimensionalen oder dreidimensionalen Datensatz zugeordnet ist.

Zum Gewinnen der Abbildungsfunktion ist es erfindungsgemäß vorteilhaft als zulässige Operatoren zur Veränderung oder Verformung des Referenzdatensatzes eine Translation oder Verschiebung, eine Rotation oder Drehung, eine Deformation oder eine Scherung zu verwenden, welche je nach Art der gemessenen Datensätze und Referenzdatensätze kombiniert werden, um den Referenzdatensatz auf den gemessenen Datensatz im zweidimensionalen oder dreidimensionalen Fall durch eine Abbildungsfunktion abzubilden. Im dreidimensionalen Fall wird zum Beispiel jedem Voxel des Referenzdatensatzes eine Abbildungsvorschrift, beispielsweise ein Verschiebungsvektor zugeordnet, um das Voxel des Referenzdatensatzes auf das korrespondierende Voxel des gemessenen Datensatzes abzubilden. Aufgrund der großen Unterschiede der einzelnen gemessenen Datensätze ist es im Allgemeinen nicht ausreichend eine einfache affine Abbildung zu verwenden, so dass ein Automatic Fluid-Elastic Registration Algorithm verwendet werden kann, welcher den Referenzdatensatz möglichst gut auf den Patientendatensatz abbildet bzw. diesen registriert. Der Referenzdatensatz erfährt hierbei typischerweise eine elastische Deformation bzw. Verformung.

Insbesondere ist es von Vorteil die zulässigen Operatoren so zu wählen, dass bestimmte anatomische Randbedingungen eingehalten werden, d. h. dass zum Beispiel durch die Abbildung keine sich selbst durchdringenden Oberflächen, Unstetigkeiten oder Risse bei anatomischen Strukturen erzeugt werden. Liegen zum Beispiel verletzte oder in Stücke gebrochene anatomische Strukturen, wie zum Beispiel ein gebrochener Wirbel, vor, so können die oben erwähnten Randbedingungen auch nicht oder nur zum Teil vorgegeben werden, wobei zum Beispiel Unstetigkeiten oder Risse zugelassen werden.

Vorteilhaft wird die Berechnung der Abbildungsfunktion hierarchisch in mehreren Stufen durchgeführt. Dabei kann zum Beispiel zuerst durch eine starre Transformation, d. h. nur durch Verschiebung und Drehung, eine Grobausrichtung des Referenzdatensatzes und/oder des gemessenen Datensatzes erfolgen, so dass diese Datensätze in etwa grob übereinstimmen, d. h. dass zum Beispiel bei der Erfassung von Daten im Bereich des Kopfes die den Kopf repräsentierenden Daten in etwa übereinander liegen und in etwa gleich zueinander ausgerichtet sind, wobei beispielsweise die Blickrichtung der durch die jeweiligen Datensätze definierten Köpfe in etwa gleich ist. Hiernach wird eine elastische Transformation, gegebenenfalls auch in Verbindung mit einer weiteren starren Transformation durchgeführt, wobei zum Beispiel Vergrößerungs-, Verkleinerungs- oder Scherungs-Operatoren verwendet werden.

Bevorzugt kann automatisch oder durch eine manuelle Auswahl aus einer vorgegebenen Anzahl von Referenzdatensätzen ein geeigneter Datensatz ausgewählt werden, welcher bevorzugt schon möglichst weitgehend mit dem gemessenen Datensatz übereinstimmt und nur eine geringere Anzahl von starren und/oder elastischen Transformationen erforderlich macht. So können zum Beispiel Referenzdatensätze für Kinder, Jugendliche, Erwachsene, Frauen, Männer, große Personen, kleine Personen, dicke Personen oder dünne Personen oder auch Referenzdatensätze für spezifische Verletzungen, wie zum Beispiel einen Meniskus-Schaden oder einen Hüft-Schaden oder auch für bestimmte erkrankte Gewebebereiche, wie zum Beispiel einen Gehirntumor in einem bestimmten bekannten Bereich vorgegeben werden, welche anschließend durch zu ermittelnde Transformationen, welche die Abbildungsfunktion bilden, auf die gemessenen Datensätze abgebildet werden, um entsprechend zugeordnete Referenz-Label-Datensätze unter Verwendung der so ermittelten Abbildungsfunktion auf individualisierte Label-Datensätze abzubilden.

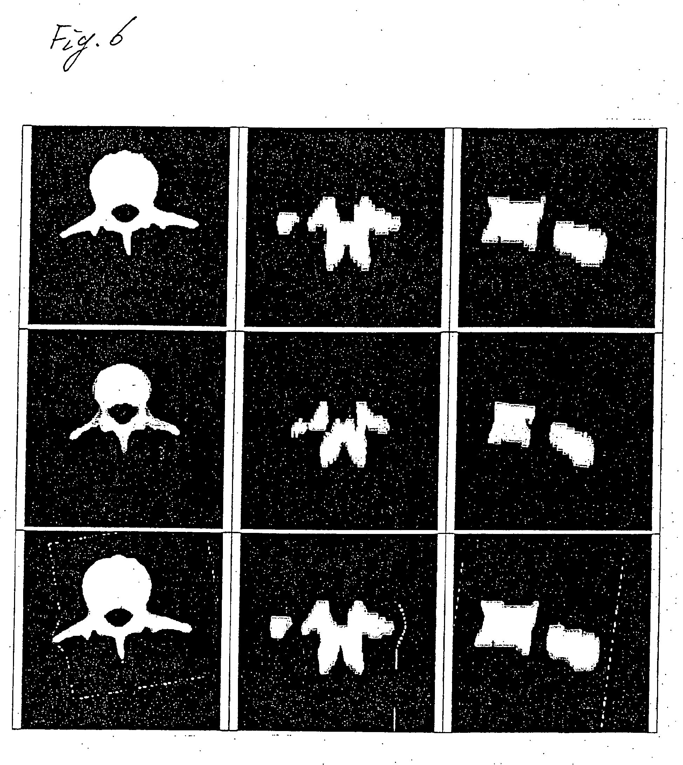

Besonders vorteilhaft wird das erfindungsgemäße Verfahren zur Segmentierung oder Trennung von Knochen oder Wirbeln eingesetzt, da zum Beispiel bei Computertomographiebildern die häufig eng aneinander liegenden Knochen oder Wirbel nicht mehr einzeln unterschieden werden können und als zusammenhängende große Knochenstruktur erscheinen, wie dies insbesondere zum Beispiel bei Hüfte/Femur, Femur/Patella/Tibia oder benachbarten Wirbeln der Fall ist. Sollen zum Beispiel nur einzelne Knochenstrukturen voneinander unterschieden werden, so kann es ausreichend sein als Referenz-Label-Datensatz nur eine oder mehrere Knochenstrukturen in dem zugeordneten Referenzdatensatz zu bezeichnen, wobei es in diesem Fall auf die Funktion oder Struktur des außerhalb der Knochen liegenden Gewebes nicht ankommt. Aufgrund des relativ hohen Kontrastes zwischen Knochen und umliegendem weichen Gewebe bei zum Beispiel einer Computertomographie ist es in einem ersten Schritt relativ einfach eine zusammenhängende Knochenstruktur zu lokalisieren, welche in einzelne anatomische Elemente, wie zum Beispiel Wirbel, unterteilt werden soll. Knochen oder Knorpel haben im Allgemeinen im groben das gleiche Erscheinungsbild, wie beispielhaft in Figur 6 gezeigt, so dass eine Abbildung eines Referenzdatensatzes auf einen gemessenen Datensatz relativ leicht durchzuführen ist. Unter Verwendung der daraus gewonnenen Abbildungsfunktion kann auch der Referenz-Label-Datensatz, welcher eine Information bezüglich der Strukturgrenzen einzelner Knochenelemente im Referenzdatensatz enthält, auf den individualisierten Label-Datensatz abgebildet werden, welcher eine Information zu den anatomischen Strukturen, insbesondere deren räumliche Abgrenzung, Grenzflächen oder deren Umfang enthält.

Somit können also nach dem Registrieren bzw. Abgleichen von Referenzdatensatz und gemessenem Datensatz die Grenzen oder aneinandergrenzenden Oberflächen aus dem Referenz-Label-Datensatz in dem gemessenen Datensatz durch die Anwendung der ermittelten Abbildungsfunktion zur Erzeugung des individualisierten Label-Datensatzes ermittelt werden und so kann eine in einer Aufnahme als große zusammenhängende Einheit erscheinende Struktur in einzelne Komponenten, wie zum Beispiel Wirbel, unterteilt werden.

Nach einem weiteren Aspekt bezieht sich die vorliegende Erfindung auf ein Computerprogramm, welches einen oder mehrere der oben beschriebenen Verfahrensschritte durchführt, wenn es in einen Computer geladen ist oder auf einem Computer läuft. Weiterhin bezieht sich die Erfindung auf ein Programmspeichermedium oder ein Computerprogrammprodukt, welches ein solches Programm enthält bzw. speichert.

Gemäß einem weiteren Aspekt bezieht sich die Erfindung auf die Verwendung des oben beschriebenen Verfahrens zur Vorbereitung oder Planung eines chirurgischen Eingriffs oder einer Behandlung, insbesondere auf dem Gebiet der Gehirn- oder Radiochirurgie.

Nach einem weiteren Aspekt bezieht sich die vorliegende Erfindung auf eine Vorrichtung zur automatischen Lokalisation mindestens einer Struktur in einem durch Messung gewonnen Datensatz mit einer Eingabevorrichtung zur Eingabe eines gemessenen Datensatzes, einer Datenbank, in welcher mindestens ein Referenzdatensatz mit zugehörigem Referenz-Label-Datensatz bespeichert ist und einer Recheneinheit, welche einen oder mehrere der oben beschriebenen Verfahrensschritte durchführt.

Vorteilhaft umfasst die Vorrichtung eine Messvorrichtung, wie zum Beispiel einen Computertomographen, eine Kernspinresonanzvorrichtung oder ähnliches, um entsprechende Datensätze zum Beispiel für einen Patienten oder Körper zu gewinnen. Vorteilhaft weist das System eine Datenausgabevorrichtung, wie beispielsweise einen Bildschirm auf, auf welchem zum Beispiel der gemessene Datensatz in einer bestimmten Schnittebene, ein Referenzdatensatz und die dem Referenz-Label-Datensatz oder dem individualisierten Label-Datensatz zugeordneten Informationen, gegebenenfalls überlagert auf den Referenzdatensatz oder den gemessenen Datensatz, dargestellt werden können.

Die Erfindung wird nachfolgend an Hand von bevorzugten Ausführungsformen beschrieben werden. Es zeigen:
- Figur 1: eine schematische Darstellung des erfindungsgemäßen Verfahrens;
- Figur 2: Querschnittansichten eines gescannten Gehirns in drei orthogonalen Ansichten (Patientendatensatz);
- Figur 3: Referenz-Ansichten mit eingezeichneten Labels, welche ungefähr den in Figur 2 gezeigten gescannten Ansichten entsprechen;
- Figur 4: die Ansichten von Figur 3 nach einer Deformation bzw. Abbildung durch eine Abbildungsfunktion mit deformierten Labels;
- Figur 5: individualisierte bzw. deformierte Labels, welche dem Patientendatensatz von Figur 2 überlagert wurden; und
- Figur 6: von oben nach unten eingescannte Patienten-Bilder (erste Zeile), Referenz-Bilder nach starrer Transformation (zweite Zeile) und Referenz-Bilder nach elastischer Transformation (dritte Zeile).

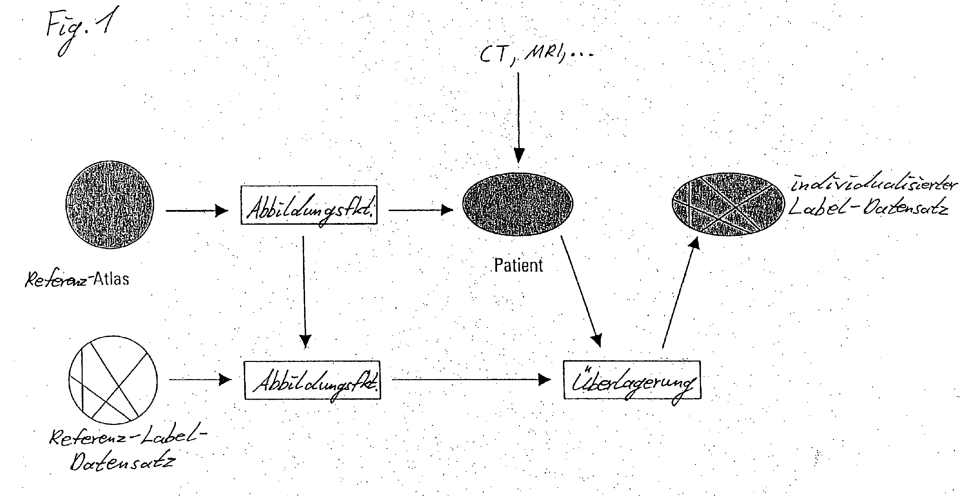

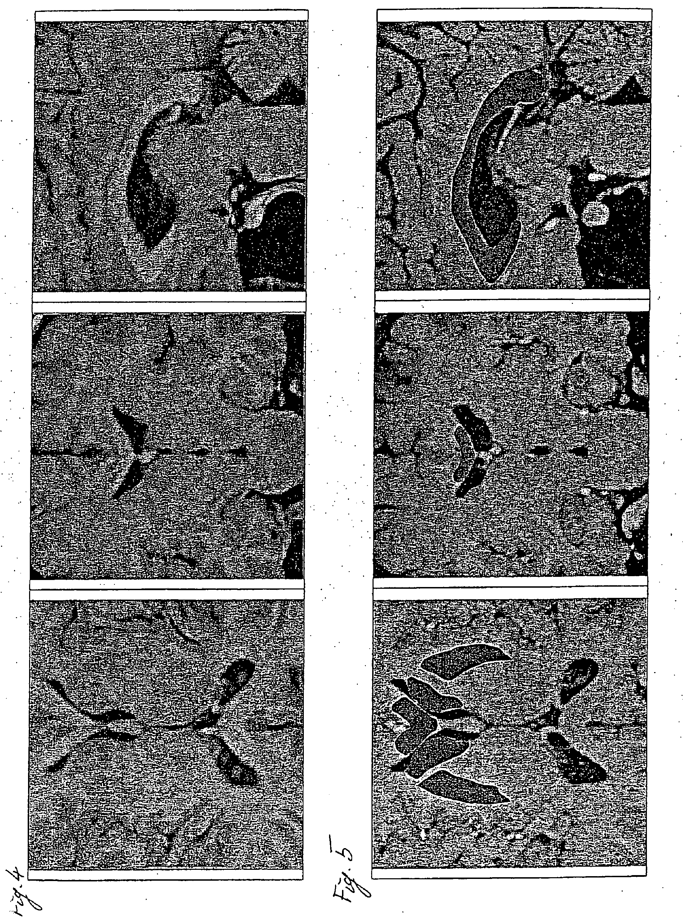

Figur 1 zeigt beispielhaft den Ablauf des erfindungsgemäßen Verfahrens. Durch Computertomographie (CT), Kernspinresonanz (MRI) oder andere Verfahren gewonnene oder gescannte Datensätze, welche zum Beispiel einen bestimmten Körperteil eines Patienten erfassen, wird ein für den Patienten spezifischer Datensatz ermittelt. Ein vorgegebener Referenzdatensatz, wie zum Beispiel der Talairach-Gehimatlas, wird ausgewählt und es wird eine Abbildungsfunktion gesucht, mit welcher der Referenzdatensatz auf den Patienten-Datensatz abgebildet werden kann. Diese Abbildungsfunktion definiert zum Beispiel wie einzelne Elemente des Referenzdatensatzes verschoben werden, um etwa dem Patienten-Datensatz zu entsprechen. Dem Referenzdatensatz ist ein Referenz-Label-Datensatz zugeordnet, welcher eine Information zu dem zum Beispiel als Intensitäts- oder Grauwert-Verteilung vorgegebenen Referenzdatensatz enthält. Ein Referenz-Label-Datensatz kann zum Beispiel die Anordnung und Begrenzung der anatomischen Strukturen in dem Referenzdatensatz beschreiben. Ist die Abbildungsfunktion zur Abbildung des Referenzdatensatzes auf den Patienten-Datensatz bekannt, so kann diese verwendet werden, um den Referenz-Label-Datensatz entsprechend abzubilden bzw. zu transformieren, um so einen individualisierten Label-Datensatz zu erhalten, welcher beispielsweise wie in Figur 1 gezeigt dem Patientendatensatz überlagert werden kann, um so die in Figur 5 gezeigten Bilder zu erzeugen. Der individualisierte Label-Datensatz enthält eine Information bezüglich der anatomischen Strukturen in dem zunächst lediglich als zum Beispiel Intensitätsverteilung vorgegebenen gemessenen Patienten-Datensatz.

Figur 2 zeigt beispielhaft in drei orthogonalen Ansichten gescannte bzw. gemessene Schnittbilder eines Gehirns eines Patienten. Figur 3 zeigt einen vorgegebenen Referenzdatensatz für die korrespondierenden drei Ansichten von Figur 2, welcher in etwa die gleichen Bereiche zeigt. Erfindungsgemäß wird zunächst eine Abbildungsfunktion ermittelt, welche die in Figur 3 gezeigten Bilder so verformt, dass sie in etwa den in Figur 2 gezeigten gescannten Bildern entsprechen. Das Ergebnis der Transformation der in Figur 3 gezeigten Referenz-Bilder ist in Figur 4 gezeigt, welche in etwa mit den in Figur 2 gezeigten eingescannten Bildern übereinstimmen. Diese so ermittelte Abbildungsfunktion wird zur Transformation eines (nicht gezeigten) Referenz-Label-Datensatzes verwendet, um einen individualisierten Label-Datensatz zu erhalten, welcher in Figur 5 als überlagerte Bereiche vor dem Hintergrund der in Figur 2 gezeigten, gescannten Patienten-Bilder dargestellt ist. Figur 5 zeigt die Position von bestimmten Gehirnstrukturen, zum Beispiel des Corpus Callosum, Caudate Nuclei und Putamina in den eingescannten Patientenbildern von Figur 2.

Figur 6 zeigt ein weiteres Ausführungsbeispiel des erfindungsgemäßen Verfahrens. In der ersten Zeile sind ein Wirbelknochen in axialer und orthogonal dazu in coronarer und sagittaler Ansicht gezeigt, welche durch einen Computertomographie-Scan eines Patienten eingescannt wurden. In der zweiten Zeile sind entsprechend ausgerichtete Referenz-Bilder gezeigt, welche durch Verschiebung und Drehung in etwa in entsprechende Positionen korrespondierend zu den eingescannten Bildern der ersten Zeile gebracht wurden. Nach einer elastischen Transformation durch Scherung, Dehnung und Stauchung der in der zweiten Zeile gezeigten Referenz-Bilder wurden die in der dritten Zeile gezeigten Bilder erhalten, welche in etwa den eingescannten in der ersten Zeile gezeigten Bilder entsprechen. Bei den Referenz-Bildern, welche in der zweiten Zeile gezeigt sind, ist der Verlauf der Grenzflächen der Knochen bekannt. Nach der elastischen Transformation dieser Bilder, um möglichst gut den eingescannten Bildern zu entsprechen, kann durch die erfindungsgemäße Anwendung des Transformationsverfahrens auf den bekannten Verlauf der Grenzoberflächen der Referenz-Bilder ermittelt werden, wie die anatomischen Strukturen, welche in den eingescannten Bildern der ersten Zeile gezeigt sind, verlaufen und so können zum Beispiel die Oberflächen der einzelnen Knochen ermittelt werden.

## Patentansprüche

1. Verfahren zur automatischen Lokalisation mindestens einer Struktur in einem durch Messung eines Objekts gewonnenen Datensatz, wobei:
a) ein Referenzdatensatz vorgegeben wird;
b) eine Abbildungsfunktion ermittelt wird, mit welcher der Referenzdatensatz in etwa auf den gemessenen Datensatz abgebildet wird; und
c) ein dem Referenzdatensatz zugeordneter Referenz-Label-Datensatz durch die Abbildungsfunktion in einen individualisierten Label-Datensatz transformiert wird,
d) wobei der Referenzdatensatz aus einer Mehrzahl von vorgegebenen Referenzdatensätzen in Abhängigkeit von Eigenschaften des gemessenen Objekts ausgesucht wird.

2. Verfahren nach Anspruch 1, wobei der Referenzdatensatz durch das gleiche Messverfahren ermittelt wird, welches zur Gewinnung des gemessenen Datensatzes verwendet wird.

3. Verfahren nach einem der vorhergehenden Ansprüche, wobei die Datensätze zweidimensionale Bilder oder dreidimensionale Volumina darstellen.

4. Verfahren nach einem der vorhergehenden Ansprüche, wobei die Abbildungsfunktion durch Transformations-, Rotations-, Scherungs- und/oder Deformations-Operatoren gebildet wird.

5. Verfahren nach einem der vorhergehenden Ansprüche, wobei die Abbildungsfunktion mit einem hierarchischen Verfahren ermittelt wird, wobei insbesondere eine starre Transformation und eine elastische Transformation durchgeführt wird.

6. Verfahren nach einem der vorhergehenden Ansprüche, wobei das Verfahren zur Lokalisation von Gewebestrukturen, insbesondere Gehirnstruktur oder Knochenstrukturen, und insbesondere zur Segmentierung von einzelnen Knochen verwendet wird.

7. Computerprogramm welches das Verfahren nach einem der vorhergehenden Ansprüche ausführt, wenn es in einen Computer geladen ist oder auf einem Computer läuft.

8. Programmspeichermedium oder Computerprogrammprodukt mit dem Programm nach dem vorhergehenden Anspruch.

9. Vorrichtung zum Lokalisieren mindestens einer Struktur in einem durch Messung eines Objekts gewonnenen Datensatz mit einer Dateneingabevorrichtung zur Eingabe des durch Messung gewonnenen Datensatzes, einem Speicher zum Speichern eines Referenzdatensatzes mit zugeordnetem Referenz-Label-Datensatz und einer Rechenvorrichtung zum ermitteln einer Abbildungsfunktion zur Abbildung des Referenzdatensatzes auf den gemessenen Datensatz und zum Abbilden des Referenz-Label-Datensatzes auf einen individualisierten Label-Datensatz, durch die ermittelte Abbildungsfunktion, wobei der Referenzdatensatz aus einer Mehrzahl von vorgegebenen Referenzdatensätzen in Abhängigkeit von Eigenschaften des gemessenen Objekts ausgesucht wird.

10. Vorrichtung nach dem vorhergehenden Anspruch mit einer Messvorrichtung zur Erfassung eines Patientendatensatzes.

11. Vorrichtung nach einem der beiden vorhergehenden Ansprüche mit einer Datenausgabevorrichtung, insbesondere einem Bildschirm, zur Anzeige des gemessenen Datensatzes, Referenzdatensatzes, Referenz-Label-Datensatzes und/oder individualisierten Label-Datensatzes.

## Claims

1. A method for automatically localising at least one structure in a dataset obtained by measuring an object, wherein:
a) a reference dataset is predetermined;
b) a mapping function is determined, using which the reference dataset is approximately mapped onto the measured dataset; and
c) a reference label dataset assigned to the reference dataset is transformed into an individualised label dataset using the mapping function;
d) wherein the reference dataset is selected from a number of predetermined reference datasets in accordance with characteristics of the measured object.

2. The method according to Claim 1, wherein the reference dataset is determined using the same measuring method as is used to obtain the measured dataset.

3. The method according to any one of the preceding claims, wherein the datasets represent two-dimensional images or three-dimensional volumes.

4. The method according to any one of the preceding claims, wherein the mapping function is formed by transforming, rotating, shearing and/or deforming operators.

5. The method according to any one of the preceding claims, wherein the mapping function is determined using a hierarchical method in which in particular a rigid transformation and an elastic transformation are performed.

6. The method according to any one of the preceding claims, wherein the method is used to localise tissue structures, in particular brain structures or bone structures, and in particular to segment individual bones.

7. A computer program which performs the method according to any one of the preceding claims when it is loaded onto a computer or is running on a computer.

8. A program storage medium or computer program product, comprising the program according to the preceding claim.

9. A device for localising at least one structure in a dataset obtained by measuring an object, comprising: a data input device for inputting the dataset obtained by measurement; a memory for storing a reference dataset together with an assigned reference label dataset; and a computational device for determining a mapping function for mapping the reference dataset onto the measured dataset and for mapping the reference label dataset onto an individualised label dataset, using the determined mapping function, wherein the reference dataset is selected from a number of predetermined reference datasets in accordance with characteristics of the measured object.

10. The device according to the preceding claim, comprising a measuring device for capturing a patient dataset.

11. The device according to any one the preceding two claims, comprising a data output device, in particular a screen, for displaying the measured dataset, the reference dataset, the reference label dataset and/or the individualised label dataset.

## Revendications

1. Procédé permettant la localisation automatique d'au moins une structure dans un ensemble de données obtenues par la mesure d'un objet, dans lequel procédé :
a) un ensemble de données de référence est prédéfini ;
b) une fonction de reproduction est calculée, par laquelle l'ensemble de données de référence est reproduit sensiblement sur l'ensemble de données mesurées ; et
c) un ensemble de données label de référence, associé à l'ensemble de données de référence, est transformé par la fonction de reproduction en un ensemble de données label individualisé,
d) l'ensemble de données de référence étant sélectionné en fonction des propriétés de l'objet mesuré dans une pluralité d'ensembles de données de référence prédéfinis.

2. Procédé selon la revendication 1, dans lequel l'ensemble de données de référence est calculé par le même procédé de mesure qui a été utilisé pour l'obtention de l'ensemble de données mesurées.

3. Procédé selon l'une quelconque des revendications précédentes, dans lequel les ensembles de données représentent des images bidimensionnelles ou des volumes tridimensionnels.

4. Procédé selon l'une quelconque des revendications précédentes, dans lequel la fonction de reproduction est formée par des opérateurs de transformation, de rotation, de cisaillement et/ou de déformation.

5. Procédé selon l'une quelconque des revendications précédentes, dans lequel la fonction de reproduction est calculée avec un procédé hiérarchique, en particulier une transformation rigide et une transformation élastique étant effectuées.

6. Procédé selon l'une quelconque des revendications précédentes, dans lequel le procédé est utilisé pour la localisation de structures tissulaires, en particulier des structures cérébrales ou des structures osseuses, et en particulier pour la segmentation des différents os.

7. Programme informatique, lequel exécute le procédé selon l'une quelconque des revendications précédentes, lorsqu'il est chargé dans un ordinateur ou se déroule dans l'ordinateur.

8. Support de mémoire pour programme ou produit programme informatique comportant le programme selon la revendication précédente.

9. Dispositif permettant la localisation d'au moins une structure dans un ensemble de données obtenues par la mesure d'un objet, comportant un dispositif d'entrée des données permettant d'entrer l'ensemble des données obtenues par mesure, une mémoire permettant de stocker un ensemble de données de référence avec un ensemble de données label de référence associé, et un dispositif de calcul permettant de calculer une fonction de reproduction pour reproduire l'ensemble de données de référence sur l'ensemble de données mesurées et pour reproduire l'ensemble de données label de référence sur un ensemble de données label individualisé, par la fonction de reproduction calculée, l'ensemble de données de référence étant sélectionné en fonction des propriétés de l'objet mesuré dans une pluralité d'ensembles de données de référence prédéfinis.

10. Dispositif selon la revendication précédente, comportant un dispositif de mesure pour détecter un ensemble de données d'un patient.

11. Dispositif selon l'une des deux revendications précédentes, comportant un dispositif de sortie des données, en particulier un écran, permettant l'affichage de l'ensemble de données mesurées, de l'ensemble de données de référence, de l'ensemble de données label de référence et/ou de l'ensemble de données label individualisé.
